# EUROPEAN PATENT APPLICATION

(11) **EP 1 829 944 A1**
(43) Date of publication of application: **05.09.2007**
(21) Application number: 06004139.9
(22) Date of filing: 01.03.2006
(51) Int. Cl.: C09D 163/00, C09D 129/14, C09D 5/12

(54) **Water-borne cationic binders for wash primers**

(71) Applicant: Cytec Surface Specialties Austria GmbH, 8010 Graz (AT)
(72) Inventor: Paar, Willibald, Dr., 8010, Graz (AT); Krassnitzer, Manfred, 8010 Graz (AT); Brindöpke, Gerhard Dr., 65934, Frankfurt (DE)
(74) Representative: Deckers, Hellmuth Alexander

(57) **Abstract**

An aqueous mixture **AB** comprising, in its solids, a mass fraction of from 5 % to 40 % of a polyvinyl butyral **B**, and a mass fraction of from 60 % to 95 % of a Mannich base **A** which is made by a two-step reaction wherein an epoxy amine adduct **A1** prepared in the first step from an epoxy resin **A11** with a mixture **A12** of a primary linear or branched aliphatic amine **A121** having from 2 to 30 carbon atoms and a further aliphatic linear, branched or cyclic amine **A122** having from 4 to 16 carbon atoms and having one primary and at least one tertiary amino group, which epoxy amine adduct **A1** is reacted in the second step with formaldehyde and a phenolic compound **A2** to form a Mannich base, and a method of use thereof as a binder in wash primers

## Description

This invention relates to a water-borne cationic binder for wash primers, a method for its preparation, and a method of use thereof in corrosion protection of base metals.

Aqueous wash primers based on externally emulsified polyvinyl butyral resin dispersions have been known, i. a., from EP 0 638 606 A. Such externally emulsified systems generally have the disadvantage that no direct pigmentation is possible due to the lack of shear stability of the emulsions so prepared. Anionically stabilised internally emulsified dispersions have shown enhanced stability, the corrosion protection imparted to base metals, however, has not been satisfactory. Cationically stabilised systems are preferable, as they allow the addition of phosphoric acid to improve the corrosion protection without gelation.

Such systems have been described in EP 1 055 686 B1, where a water-reducible polyvinyl butyral composition is prepared by reaction of an adduct of a diisocyanate and a tertiary alkanolamine with a polyvinyl butyral which, for statistical reasons, always possesses a number of free hydroxyl groups. This reaction product is then mixed with a water-compatible plasticising resin, such as an alkyd resin, a phenolic resin, and preferably, a phenoxy resin. The corrosion protection provided by such compositions, however, still needs improvement.

It has been found in the investigations leading to the present invention that corrosion protection can be improved by application, to a base metal substrate, of a composition comprising a physical mixture of a polyvinyl butyral and a water soluble Mannich base.

The present invention is therefore related to a mixture **AB** comprising a mass fraction of from 5 % to 40 % of a polyvinyl butyral **B**, and a mass fraction of from 95 % to 60 % of a Mannich base **A** (wherein the mass fractions add to 100 %) made by a two-step reaction of an epoxy amine adduct **A1** prepared in the first step from an epoxy resin **A11** with a mixture **A12** of a primary linear or branched aliphatic amine **A121** having from 2 to 30 carbon atoms and a further aliphatic linear, branched or cyclic amine **A122** having from 4 to 16 carbon atoms and having one primary and at least one tertiary amino group, which epoxy amine adduct **A1** is reacted in the second step with formaldehyde and a phenolic compound **A2** to form a Mannich base. This mixture **AB** is dispersed in water, after at least partial neutralisation of the amino groups by addition of an acid.

A further object of the invention is a process for the preparation of the said mixture **AB**, comprising mixing the amines **A121** and **A122,** preferably in an amount-of-substance ratio of ***n*(A121)** to ***n*(A122)** of from 0.5 mol : 2 mol to 2 mol : 0.5 mol, where ***n***(X) is the amount of substance of compound X, X standing for either the amines **A121** or the amines **A122,** reacting the said amine mixture **A12** with an epoxy resin **A11,** where the amount of substance ***n***(NH₂) of primary amino groups in the mixture **A12** divided by the amount of substance ***n***(EP) of epoxide groups in **A11** is from 1.05 mol/mol to 1.3 mol/mol, to form the epoxy amine adduct **A1,** admixing the polyvinyl butyral **B**, adding to this mixture formaldehyde and a phenolic compound **A2**, where the quantity employed of the said phenolic compound and that of formaldehyde is preferably chosen such that the amount of substance of each is from 95 % to 105 % of the amount of substance of the amino hydrogen groups remaining in the reaction product A1, the Mannich base formed is then neutralised, preferably with an organic acid, and dispersed in water.

A further object of the present invention is a method of use of the mixture **AB** as binder in a wash primer which is applied to substrates of base metals to protect these from corrosive attack. These wash primers are preferably made by first preparing a slurry of a pigment mixture preferably comprising inter alia, zinc phosphate and iron oxide, optionally adding fillers, preferably silicate based fillers such as talc or alumosilicates, wetting agents, dispersing agents, and thickeners, adding to this slurry the binder mixture **AB**, and homogenising the resulting mixture. The primer thus obtained is applied to a substrate by spraying or dipping, and dried.

The epoxy resins **A11** are preferably based on aromatic ethers of glycidyl alcohol, preferably of di- or polyvalent phenols such as bisphenol A, bisphenol F, dihydroxy diphenyl sulphone, and of novolaks, or esters of glycidyl alcohol and aromatic dihydric or polyhydric acids such as terephthalic acid. It is also possible to use these aromatic epoxy resins in mixture with aliphatic epoxy resins, preferably those derived from polyoxypropylene glycol which imparts improved elasticity to the binders. Especially preferred is the diglycidyl ether of bisphenol A.

The amines **A121** are preferably aliphatic amines having from four to twenty-four carbon atoms and one primary amino group, such as butylamine, hexylamine, 2-ethylhexylamine, decylamine, dodecylamine, tridecylamine, octadecylamine, and mixtures of aliphatic primary fatty amines made from fatty acids or fatty alcohols preferably obtained from natural sources. Particularly preferred are cocoalkyl amine, stearylamine, a commercially available mixture of C₁₆- to C₂₂-alkylamines, tallow amine, and oleylamine.

The amines **A122** having one primary and at least one tertiary amino group preferably have one dialkylamino group such as 3-N,N-dimethylaminopropylamine, 3-N,N-diethylaminopropylamine, N-(2-aminoethyl)-morpholine, N-(2-aminoethyl)-piperazine, and tris-(2-aminoethyl)amine.

The phenolic compounds **A2** are preferably selected from the group consisting of monohydric mononuclear phenols, such as phenol itself, the isomers of cresol and xylenol, dihydric mononuclear phenols such as resorcinol, catechol, and hydroquinone, and their homologues such as 4-methyl catechol and 2-methylresorcinol, and particularly preferred, dinuclear dihydric phenols and derivatives of these such as bisphenol A, bisphenol F, dihydroxy diphenyl and dihydroxy diphenyl ether, dihydroxybenzophenone and dihydroxydiphenyl sulphone, as well the homologues thereof such as tetramethyl bisphenol A. Of these, bisphenol A is especially preferred.

Preferably the polyvinyl butyral **B** has a viscosity of from 10 mPa·s to 1000 mPa·s (dissolved in ethanol, mass fraction of solids 10 %, measured according to DIN 53 015 at 23 °C), and a weight average molar mass, determined by size exclusion chromatography in tetrahydrofurane solution, as calibrated with polystyrene standards, of from 25 kg/mol to 500 kg/mol. Its mass fraction of vinyl alcohol moieties is typically from 9 % to 30 %.

In the preparation of the mixture **AB**, the amines **A121** and **A122** preferably mixed in an amount-of-substance ratio of ***n*(A121)** to ***n*(A122)** of from 0.7 mol: 1.8 mol to 1.8 mol: 0.7 mol, particularly preferred from 0.8 mol : 1.2 mol to 1.2 mol : 0.8 mol where ***n***(X) is the amount of substance of compound X, reacting the said amine mixture **A12** with an epoxy resin **A11,** where the amount of substance ***n***(NH₂) of primary amino groups in the mixture **A12** divided by the amount of substance ***n***(EP) of epoxide groups in **A11** is preferably from 1.1 mol/mol to 1.25 mol/mol, to form the epoxy amine adduct **A1,** until substantially all epoxy groups have reacted which is monitored by the decrease of the specific amount of epoxy groups remaining in the mixture which specific amount shall be less than 5 mmol/kg, admixing the polyvinyl butyral **B**, adding to this mixture formaldehyde and the phenolic compound **A2**, where the amount of the said phenolic compound and that of formaldehyde is preferably chosen such that the amount of substance of each is from 95 % to 105 % of that of the primary amino groups remaining in the reaction mixture of **A11** and **A12**, the Mannich base formed is then neutralised preferably with an organic acid, such as acetic acid or lactic acid, and dispersed in water under thorough stirring. Preferably, from 20 % to 100 % of the amino groups are neutralised with acid. The mass fraction of polyvinyl butyral in the mixture with the Mannich base is preferably from 7.5 % to 30 %, and particularly preferred from 10 % to 20 %.

Admixing the polyvinyl butyral **B** to the newly formed epoxy amine adduct has been found preferable because of the favourable viscosity ratio of these two components while undiluted.

The aqueously dispersed binder mixture is then used to prepare a wash primer with the following general procedure:

Deionised water is charged to a mixing vessel, additives such as wetting, thickening, and dispersing agents are optionally stirred in, and then, a mixture of pigments and fillers such as ferric oxide, zinc phosphate, alumosilicate, and talc, is added and homogenised in a bead mill or similar high efficiency mixing device. The binder solution is then added in the same mixer, where care is take that the temperature remains below 50 °C. Optionally, a further thickening agent is added to adjust the viscosity and flow behaviour. The wash primer dispersion so obtained can be applied to a substrate by spraying, dipping etc. It has been found to be particularly effective for non-ferrous substrates such as aluminium, magnesium, zinc, zinc-coated steel, copper, brass, bronze, glass, and plastic substrates.

The invention is further explained in the following examples. In these, the specific content of epoxide groups *"SEC"* is defined as the ratio of the amount of substance of epoxide groups ***n***(EP) and the mass ***m***_{B} of component B (in a solution or dispersion, of the mass of solids) and hence, the reciprocal of the so-called "epoxide value"; the commonly used unit is "mmol/kg".

### Examples

### Example 1 Preparation of the Binder

A mixture of 93 g of dimethylamino propylamine and 74 g of decylamine was charged in a vessel and heated to 50°C. Within one hour, 710 g of a xylene solution comprising a mass fraction of 75 % of a diglycidyl ether of bisphenol A having a specific content of epoxy groups of 2.083 mol/kg was added at this temperature under stirring, which stirring was continued for three further hours. The solvent was then removed by distillation under reduced pressure. 270 g of methoxypropanol were added, the solution was heated to 120 °C, and 140 g of a commercial polyvinyl butyral (®Mowital B 20 H, Kuraray Specialities Europe GmbH, having a residual mass fraction of vinyl alcohol moieties of approximately 20 %) were added under stirring. When the mixture was homogeneous, 110 g of bisphenol A were added whereupon the mixture was cooled to 70 °C. 40 g of paraformaldehyde were then admixed, the mass was stirred for three more hours at the same temperature, and neutralised by addition of 25 g of anhydrous acetic acid. Slowly, 1100 g of deionised water were added under stirring to yield a milky stable dispersion having a mass fraction of solids of 43.4 % and a viscosity of 190 mPa·s, measured at 23 °C and a shear gradient of 100 S⁻¹.

### Example 2 Preparation of the Wash Primer

In a bead mill, a homogeneous mixture was prepared of 65 g of deionised water, 28 g of ®Additol VXW 6208 (commercial polymeric non-ionic dispersing agent, Cytec Surface Specialties Austria GmbH), 5 g of ®Surfynol SE-F (commercial nonionic wetting agent based on acetylenic diol, Air Products and Chemicals, Inc.), 86 g of ®Bayferrox 130 BM (commercial alpha-Fe₂O₃ pigment, Lanxess Deutschland GmbH), 85 g of ®Heucopohos ZPO (commercial organically modified basic zinc orthophosphate hydrate, Heubach GmbH), 42 g of ®ASP 600 (hydrous aluminosilicate, Engelhard Corporation), 42 g of talc IT extra (Norwegian Talc AS), and 7 g of ®Acrysol RM-8W (hydrophobic modified ethylene oxide urethane rheology modifier, Rohm & Haas Co.).

To this mixture, 637 g of the binder dispersion of Example 1 and further 3 g of ®Acrysol RM-8W were added, and the resulting mixture was again homogenised, care being taken that the temperature during mixing did not exceed 50 °C. A paint was obtained having the following characteristics:

| | |
|---|---|
| mass fraction of solids | 51 % |
| viscosity | 200 mPa·s (measured at 23 °C and a shear gradient of 10000 s⁻¹) |
| ***m***(pigment) / ***m***(binder) | 1 g/g |
| pH | 6.5 (measured in aqueous dilution, mass fraction of solids 10 %) |
| Tack-Free Time | 15 min |

***m***(X) stands for mass of component X

### Example 3 Comparative Wash Primer (according to EP 1055 686 B1)

Example PVB3 of EP 1 055 686 B1 was repeated:

A plasticiser resin PH1 was prepared as follows: 913 g of ®Beckopox EP 140 (bisphenol A based epoxy resins having a specific content of epoxide groups of approximately 5.56 mol/kg; corresponding to ***n***(EP) = 5.07 mol), 211 g (1.85 mol) of bisphenol A, and 188.2 g (2.0 mol) of phenol were charged into a vessel and heated to 110 °C to 120 °C under a nitrogen blanket until a clear and homogeneous mixture was obtained. The mixture was cooled to 80 °C, and 51.1 g (1.0 mol) of dimethylamino propylamine were added under cooling whereupon a strongly exothermic reaction set in. After the addition was terminated, the reaction mixture was heated to from 150°C to 160 °C taking advantage of the exothermic reaction, which temperature was kept constant for about three to four hours. Full neutralisation of the basis nitrogen groups (amine number of 41 mg/g) yielded a stable dispersion having a mass fraction of solids of about 40 %, and a viscosity of about 50 mPa·s (measured according to DIN EN ISO 3219, at 23 °C).

255 g of ®Mowital B 20 H were dissolved in 850 g of xylene and heated to 80 °C. 84 g of a solution were added very rapidly, comprising a mass fraction of 50 % of an isocyanate functional intermediate made from 174 g of toluylene diisocyanate and 89 g of dimethyl ethanolamine in xylene, as taught in Austrian Patent Specifications AT-B 342,169, AT-B 346,989, and AT-B 362,479. The reaction mixture was kept at 100 °C for one hour until an amine number of 30 mg/g and a mass fraction of solids of 25 % were reached.

400 g of this product were charged, and 100 g of the plasticiser resin described supra and 20 g of N-methyl pyrrolidone were added and homogenised for about one hour at 100 °C. The mass fraction of polyvinyl butyral in the mass of solids was 43 %, the amine number of the product was 36 mg/g, and the mass ratio of solvent (NMP) to resin solids was about 20 cg/g. After neutralisation of the remaining basic nitrogen groups with formic acid and dilution with water, the auxiliary solvent, xylene, was fully removed by azeotropic distillation. A stable dispersion having a mass fraction of solids of approximately 23 % and a viscosity of not exceeding 50 mPa·s at 23 °C was obtained.

77 g of this dispersion were mixed with 7.6 g of a dispersing agent (®Additol VXW 6208, polymeric non-ionic dispersant, Cytec Surface Specialties Austria GmbH), 2.5 g of rheology additive (®Acrysol RM8W, solvent-free hydrophobically modified ethylene oxide urethane, Rohm & Haas Company), 7.7 g of fully deionised water, 3.8 g of ethylene glycol monobutyl ether, and 1.4 g of a defoamer (®Additol XW 376, aqueous emulsion of waxes and mineral oils, Cytec Surface Specialties Austria GmbH), to yield 100 g of a paste resin composition. This paste resin composition was added to a pigment mixture comprising 11.5 g of ®Bayferrox 130 BM, 11.4 g of ®Heucophos ZPO, and 5.6 g each of ®ASP 600 and talc IT extra to yield 134.2 g of a pigment paste.

21 g of the plasticiser resin PH1 (see above) and 11 g of a curing agent made by mixing 5.0 g of ®Acrylsol RM8W, 88.7 g of fully deionised water and 6.3 g of a 75 % strength phosphoric acid, were added to this paste to form the comparative wash primer composition.

### Example 4: Performance Test

The paint compositions (wash primers) of Examples 2 and 3 were tested after application to a zinc-treated steel sheet (dry film thickness of 10 µm). The following results were found (GT0 for best, and GT5 for worst result in the cross cut test):

| | Wash primer of Example 2 | Comparative Wash primer of Example 3 |
|---|---|---|
| Test Method | | |
| Cross Cut Test¹ | GT 0 | GT 1 |
| Water Resistance ² | 72 h | 24 h |
| Corrosion Test ³ | 500 h | 120 h |
| Cross Cut Test ⁴ | GT 0 | GT 1 |

| | | |
|---|---|---|
| 1 Performed on Wash Primer Layer on Metal Sheet 2 Wash Primer on Metal Sheet, Storage under Water at 23 °C, Time with no Visible Change of the Coating Layer 3 Salt Spray Test according to ASTM B 117 4 Performed on Additional Layer Made with a Water Based Top Coat | | |

From the test results, the improvement brought about by the invention over the prior art as cited is clearly visible.
An additional advantage stems from the fact that there is no plasticiser resin needed in primer formulations comprising the aqueous mixtures of polyvinyl butyral and the Mannich bases of the present invention.

## Claims

1. An aqueous mixture **AB** comprising, in its solids, a mass fraction of from 5 % to 40 % of a polyvinyl butyral **B,** and a mass fraction of from 60 % to 95 % of a Mannich base **A** which is made by a two-step reaction wherein an epoxy amine adduct **A1** prepared in the first step from an epoxy resin **A11** with a mixture **A12** of a primary linear or branched aliphatic amine **A121** having from 2 to 30 carbon atoms and a further aliphatic linear, branched or cyclic amine **A122** having from 4 to 16 carbon atoms and having one primary and at least one tertiary amino group, which epoxy amine adduct **A1** is reacted in the second step with formaldehyde and a phenolic compound **A2** to form a Mannich base.

2. The aqueous mixture of claim 1 wherein the Mannich base A comprises moieties derived from a mixture of amines **A12** comprising a primary linear or branched aliphatic amine **A121** having from 2 to 30 carbon atoms and a further aliphatic linear, branched or cyclic amine **A122** having from 4 to 16 carbon atoms and having one primary and at least one tertiary amino group.

3. The aqueous mixture of claim 2 wherein the amount-of-substance ration of amines **A121** to amines **A122** is from 0.5 mol: 2 mol to 2 mol: 0.5 mol.

4. The aqueous mixture of claim 2 wherein in the mixture of amines, the amines **A121** are selected from the group consisting of butylamine, hexylamine, 2-ethylhexylamine, decylamine, dodecylamine, tridecylamine, octadecylamine, and cocoalkyl amine, stearylamine, tallow amine, and oleylamine.

5. The aqueous mixture of claim 2 wherein in the mixture of amines, the amines **A122** are selected from the group consisting of 3-N,N-dimethylaminopropylamine, 3-N,N-diethylaminopropylamine, N-(2-aminoethyl)-morpholine, N-(2-aminoethyl)-piperazine, and tris-(2-aminoethyl)-amine.

6. The aqueous mixture of claim 1 wherein the phenolic compound **A2** is selected from the group consisting of monohydric mononuclear phenols, dihydric mononuclear phenols, and dinuclear dihydric phenols.

7. The aqueous mixture of claim 6 wherein the phenolic compound **A2** is selected from the group consisting of phenol itself, the isomers of cresol and xylenol, resorcinol, catechol, hydroquinone, 4-methyl catechol, 2-methylresorcinol, bisphenol A, bisphenol F, dihydroxy diphenyl and dihydroxy diphenyl ether, dihydroxybenzophenone and dihydroxydiphenyl sulphone.

8. The aqueous mixture of claim 1 wherein from 20 % to 100 % of the amino groups are neutralised with acid.

9. The aqueous mixture of claim 1 wherein the mass fraction of solids is from 35 % to 65 %.

10. A method of use of the aqueous mixture of claim 1 to prepare an aqueous wash primer, comprising homogenising a pigment and filler mixture which comprises at least a zinc phosphate pigment, in water to form a pigment slurry, and adding thereto the aqueous mixture of claim 1.
